# EUROPÄISCHE PATENTSCHRIFT

(11) **EP 3 662 001 B1**
(45) Veröffentlichungstag und Bekanntmachung des Hinweises auf die Patenterteilung: **07.09.2022**
(21) Anmeldenummer: 18743846.0
(22) Anmeldetag: 31.07.2018
(51) Int. Cl.: C08J 9/00, C08K 3/34, C08L 63/00, C08G 59/18, C08J 9/32, C08J 9/12, C08J 9/06, B62D 29/00

(54) **THERMISCH EXPANDIERBARE EINKOMPONENTIGE HITZEHÄRTENDE EPOXIDHARZZUSAMMENSETZUNG MIT HOHER STANDFESTIGKEIT UND GUTER GRANULIERBARKEIT**
THERMALLY EXPANDABLE SINGLE-COMPONENT HEAT-CURABLE EPOXY RESIN COMPOSITION WITH HIGH STABILITY AND GOOD GRANULATION
COMPOSITION DE RÉSINE ÉPOXYDE THERMODURCISSABLE, À UN COMPOSANT, THERMO-EXPANSIBLE, À HAUTE STABILITÉ ET BONNE GRANULABILITÉ

(30) Priorität: 04.08.2017 EP 17184951
(43) Veröffentlichungstag der Anmeldung: 10.06.2020
(73) Patentinhaber: Sika Technology AG, 6340 Baar (CH)
(72) Erfinder: CAVIEZEL, Dario, 5620 Bremgarten (CH)
(74) Vertreter: Sika Patent Attorneys
(86) Internationale Anmeldenummer: PCT/EP2018/070792
(87) Internationale Veröffentlichungsnummer: WO 2019/025465

(56) Entgegenhaltungen:
- EP-A1- 2 368 957
- US-A- 3 275 587

## Beschreibung

### Technisches Gebiet

Die Erfindung betrifft das Gebiet der thermisch expandierbaren hitzehärtenden Epoxidharzzusammensetzungen, insbesondere zur Herstellung von Strukturschäumen sowie ein Verstärkungselement für Hohlstrukturen, die eine solche thermisch expandierbare Zusammensetzung umfassen, ein Verfahren zur Herstellung derartiger Verstärkungselemente, deren Verwendung zur Verstärkung einer Hohlstruktur und ein Verfahren zur Verstärkung einer Hohlstruktur.

### Stand der Technik

Ein wichtiges Einsatzgebiet von thermisch expandierbaren hitzehärtenden Epoxidharzzusammensetzungen findet sich im Fahrzeugbau, insbesondere beim Ausschäumen von Hohlräumen im Rohbau.

Hergestellte Produkte enthalten oft Öffnungen und Hohlräume oder andere Hohlteile, die aus dem Herstellungsverfahren resultieren und / oder aus anderen Gründen, wie Gewichtsreduktion, konzipiert sind. Kraftfahrzeuge zum Beispiel umfassen mehrere solcher Öffnungen und Hohlräume im gesamten Fahrzeug, beispielsweise in den Fahrzeugsäulen und im Blech der Fahrzeugtüren.

Es ist oft wünschenswert, solche Öffnungen und Hohlräume durch Verstärkungselemente zu verstärken, die in die Öffnung oder den Hohlraum eingebaut werden, um die Hohlstruktur des hergestellten Produkts zu verstärken, beispielsweise eine Fahrzeugsäule, derart, dass dieses widerstandsfähiger gegen mechanische Belastung wird, jedoch den Vorteil des geringen Gewichts der Hohlstruktur beibehält.

Solche Elemente, die für die Verstärkung verwendet werden, bestehen oft aus einem Träger aus Kunststoff, Metall oder einem anderen starren Material und einer oder mehreren Schichten eines daran angebrachten, insbesondere im Spritzgussverfahren angebrachten Epoxidharzzusammensetzungen, die in der Lage sind, ihr Volumen zu erweitern, wenn Wärme oder eine andere physikalische oder chemische Form von Energie eingebracht wird. Solche Bauteile können aber auch vollständig aus expandierbarem Material bestehen. Unter Verwendung einer entsprechenden Konstruktion ist es möglich, das Verstärkungselement während des Herstellungsprozesses in den Hohlraum der zu verstärkenden Struktur einzusetzen, aber gleichzeitig die Innenwände und/oder die Hohlräume der zu verstärkenden Struktur für Flüssigkeiten zugänglich zu machen. Beispielsweise können während des Herstellungsprozesses eines Fahrzeugs die Hohlteile eines Metallrahmens noch weitgehend von einer Elektrobeschichtungsflüssigkeit bedeckt werden, während die Verstärkungselemente bereits eingesetzt sind. Während einem nachfolgenden Wärmebehandlungsschrittes expandiert die Epoxidharzzusammensetzung und das Verstärkungselement füllt, respektive verstärkt, die Hohlräume.

Die Entwicklung solcher Verstärkungselemente hat zu hochentwickelten Systemen geführt, wo das expandierbare Material sein Volumen um bis zu 200-300% oder mehr erhöhen kann und eine schaumartige Struktur bildet, die die Hohlräume füllt und an den Wänden der beabsichtigten Struktur haftet und diese verstärkt. Besonders in der Automobilherstellung hat dies zu einer erheblichen Gewichtsreduzierung und einer hervorragenden Verstärkung in der Karosserie geführt.

Derzeit eingesetzte thermisch expandierbare Epoxidharzzusammensetzung bestehen häufig aus Epoxidfestharzen. Diese Zusammensetzungen enthalten weiterhin Treibmittel. Unter Aktivierungsbedingungen wie erhöhter Temperatur erfolgt die Aushärtung des Epoxidharzes, während sich gleichzeitig das Treibmittel zersetzt und Gase wie Stickstoff oder Kohlenstoffmonoxid freisetzt oder sich physikalisch ausdehnt. Dies führt zu der oben erwähnten Volumenausdehnung und der Bildung eines stabilen Schaums, der im Idealfall den Hohlraum wie vorgesehen füllt und an seinen Wänden haftet.

Solche einkomponentigen hitzehärtenden Epoxidharzzusammensetzungen werden typischerweise im Spritzgussverfahren auf den Träger aufgebracht.

Für eine Verwendung in einem Spritzgussverfahren werden die Komponenten der Epoxidharzzusammensetzungen zuerst vermischt und anschliessend unter Zuhilfenahme von einem Extruder und einem Granulator zu Granulat verarbeitet. Bei dem Granulierungsschritt fallen aufgrund der Brüchigkeit des extrudierten Materials hohe Anteile an feinkörnigem Material an, welche das Einzugsverhalten im Extruder des nachfolgenden Spritzgussverfahrens behindern würden und daher ausgeschieden werden muss. Der resultierende Materialverlust und die aufwändige Abtrennung des feinkörnigen Materials sind zeit- und kostenintensiv.

Weiter stellt sich bei den Epoxidharzzusammensetzungen oft das Problem einer ungenügenden Standfestigkeit derselben während dem Schäumungsprozess. Die auf dem Träger aufgebrachten Epoxidharzzusammensetzungen fliessen/rutschen in diesem Fall während den hohen Temperaturen des Schäumungsprozesses vom Träger ab und verschieben sich dabei weg von der ursprünglichen Standort. Dadurch befindet sich der Strukturschaum in solchen Fällen nicht mehr am vorgesehenen Ort.

Die US 3275587 A offenbart Klebstoffzusammensetzung enthaltend Epoxidharz, ein Aminkarbamat und Wasser als Mörtel für Keramikplatten. Weiter offenbart die EP 2368957 A1 Verstärkungselemente zur Verstärkung in Hohlräumen von strukturellen Bauteilen umfassend einen Träger aus einem Kunststoff, welcher zumindest teilweise mit einem Metall beschichtet ist, und einen an der Metallbeschichtung des Trägers angebrachten schäumbaren, hitzehärtenden Strukturklebstoff.

Es besteht deshalb ein Bedürfnis nach thermisch expandierbaren hitzehärtenden Epoxidharzzusammensetzungen, welche im Spritzgussverfahren verwendet werden können, eine hohe Standfestigkeit während dem Schäumungsprozess zeigen und gleichzeitig während dem Granulierungsschritt nur einen geringen Anteil an feinkörnigem Material ergeben.

### Darstellung der Erfindung

Aufgabe der vorliegenden Erfindung ist es daher, hitzehärtende Epoxidharzzusammensetzungen zur Verfügung zu stellen, welche im Spritzgussverfahren eingesetzt werden können, eine hohe Standfestigkeit während dem Schäumungsprozess aufweisen und gleichzeitig während dem Granulierungsschritt zu einen geringen Anteil an feinkörnigem Material führen.

Diese Aufgabe konnte überraschenderweise durch eine hitzehärtende Epoxidharzzusammensetzung gemäss Anspruch 1 gelöst werden. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft einkomponentige hitzehärtende Epoxidharzzusammensetzungen, umfassend:
mindestens ein Epoxid-Festharz **EP;**
mindestens einen latenten Härter für Epoxidharze;
mindestens ein Treibmittel;
0.25 - 4.5 Gew.-% Aerogelpartikel, bezogen auf das Gesamtgewicht der einkomponentigen hitzehärtenden Epoxidharzzusammensetzung,
wobei die einkomponentige hitzehärtende Epoxidharzzusammensetzung einen Schmelzflussindex (MFI) von 10 - 80 g/10 min, insbesondere 20 - 80 g/10 min, bevorzugt 30 - 50 g/10 min, aufweist, wobei der MFI bei 110°C, 2,16 kg gemäss ASTM D1238 bestimmt wird.

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Als "Raumtemperatur" wird im vorliegenden Dokument eine Temperatur von 23°C bezeichnet.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Epoxid-Festharz" ist dem Epoxid-Fachmann bestens bekannt und wird im Gegensatz zu "Epoxid-Flüssigharz" verwendet. Die Glasübergangstemperatur T_{G} der Epoxid-Festharze liegt über der Raumtemperatur von 25°C, d.h. sie lassen sich bei Raumtemperatur zu schüttfähigen Partikeln zerkleinern.

Der Begriff "Diphenol" bezeichnet im vorliegenden Dokument einkernige, mehrkernige sowie kondensierte Aromaten und Heteroaromaten, welche zwei phenolische Hydroxylgruppen aufweisen.

Als Epoxid-Festharze **EP** eignen sich insbesondere Epoxid-Festharze der Formel (VI)

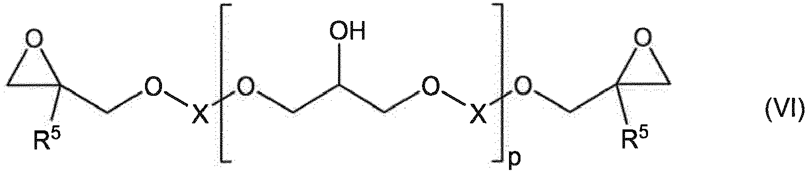

Der Rest R⁵ steht unabhängig voneinander jeweils für ein Wasserstoffatom oder für eine Methylgruppe.

Der Rest X steht unabhängig voneinander jeweils für einen zweiwertigen Rest eines Diphenols nach Entfernung der beiden Hydroxylgruppen. Als Diphenol eignen sich insbesondere Diphenole, welche ausgewählt sind aus der Gruppe bestehend aus 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (= Bisphenol A), Bis(4-hydroxyphenyl)methan (= Bisphenol F), Bis(4-hydroxyphenyl)sulfon (= Bisphenol S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan, Phenolpthalein, Fluorescein, 4,4'-[bis-(hydroxyphenyl)-1,3-Phenylenbis-(1-Methyl-ethyliden)] (= Bisphenol M), 4,4'-[bis-(hydroxyphenyl)-1,4-Phenylenbis-(1-Methyl-ethyliden)] (= Bisphenol P), 2,2'-Diallyl-bisphenol-A, Diphenole und Dikresole hergestellt durch Umsetzung von Phenolen oder Kresolen mit Di-isopropylidenbenzol sowie alle Isomeren der vorgenannten Verbindungen.

Der Index p steht für einen Wert von ≥ 2, insbesondere von 2 bis 12, bevorzugt von 2 bis 7.

Bevorzugte Epoxid-Festharze **EP** weisen eine Glasübergangstemperatur T_{G} von ≥ 25°C, insbesondere von ≥ 30°C, auf, lassen sich typischerweise herstellen aus der Umsetzung von Verbindungen der Formel HO-X-OH mit Epichlorhydrin und/oder 2-Methyl-epichlorhydrin, wobei X bereits vorhergehend beschrieben worden ist. Dem Fachmann ist dabei klar, dass X im Epoxid-Festharz **EP** der Formel (VI) unabhängig voneinander aus der beschriebenen Gruppe ausgewählt sein können.

Derartige Epoxid-Festharze **EP** sind beispielsweise kommerziell erhältlich unter den Handelsnamen Araldite^{®} GT 7071 oder Araldite^{®} GT 7004 von der Firma Huntsman International, LLC, USA. Weitere geeignete Epoxid-Festharze **EP** sind beispielsweise kommerziell erhältlich von The Dow Chemical Company, USA, oder von Hexion Specialty Chemicals Inc, USA.

Weiterhin können modifizierte Epoxid-Festharze, insbesondere fettsäuremodifizierte Epoxid-Festharze verwendet werden, wie sie beispielsweise unter dem Handelsnamen Araldite^{®} GT 6404 von der Firma Huntsman International, LLC, USA, kommerziell erhältlich sind.

Der Anteil des Epoxid-Festharzes **EP** beträgt vorzugsweise 30 bis 90 Gew.-%, insbesondere 35 bis 85 Gew.-%, bevorzugt 40 bis 75 Gew.-%, bezogen auf das Gesamtgewicht der Zusammensetzung.

Weiterhin kann die Zusammensetzung zusätzlich mindestens ein Epoxid-Flüssigharz enthalten. Bevorzugte Epoxid-Flüssigharze weisen die Formel (VII) auf

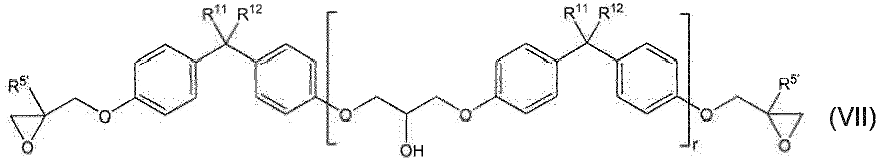

Hierbei stehen die Reste R^{5'}, R¹¹ und R¹² unabhängig voneinander entweder für H oder CH₃. Weiterhin steht der Index r für einen Wert von 0 bis 1. Bevorzugte Epoxid-Flüssigharze weisen einen Wert r von ≤ 0.2 auf.

Es handelt sich somit vorzugsweise um Diglycidylether von Bisphenol A (BADGE), von Bisphenol F (BFDGE) sowie von Bisphenol A/F. Die Bezeichnung ,A/F' verweist hierbei auf eine Mischung von Aceton mit Formaldehyd, welche bei dessen Herstellung als Edukt verwendet wird. Solche Flüssigharze sind beispielsweise unter den Handelsnamen Araldite^{®} GY 250, Araldite^{®} PY 304, Araldite^{®} GY 282 von der Firma Huntsman International, LLC, USA, oder D.E.R.^{®} 331 oder D.E.R.^{®} 330 von der Firma The Dow Chemical Company, USA, oder unter den Handelsnamen Epikote^{®} 828 oder Epikote^{®} 862 von der Firma Hexion Specialty Chemicals Inc., USA, kommerziell erhältlich.

Weiterhin kann die Zusammensetzung zusätzlich mindestens ein Epoxidgruppen aufweisendes Phenolharz enthalten. Bevorzugt werden dabei Phenolharze, welche hergestellt sind aus einer Polykondensationsreaktion von Phenol oder Kresol mit Formaldehyd in einem stöchiometrischen Verhältnis von Phenol zu Formaldehyd von ≥ 1:1, insbesondere von 1.2:1 bis 2:1, unter Verwendung meist saurer Katalysatoren, und anschliessender Reaktion des erhaltenen Polyphenols (auch Novolak genannt) mit Epichlorohydrin und/oder 2-Methyl-epichlorhydrin.

Derartige Epoxidgruppen aufweisende Polyphenole, bzw. Novolake sind beispielsweise unter den Handelsnamen D.E.N^{™} 431 und D.E.N^{™} 438 kommerziell erhältlich von The Dow Chemical Company, USA.

Vorteilhaft beträgt der Anteil des Epoxid-Flüssigharzes oder des Phenolharzes 0.1 bis 20 Gew.-%, vorzugsweise 0.1 bis 15 Gew.-%, insbesondere 0.1 bis 5 Gew.-%, bezogen auf das Gesamtgewicht der Zusammensetzung.

Der hitzehärtende einkomponentige Epoxidharzklebstoff enthält ferner mindestens einen latenten Härter für Epoxidharze. Latente Härter sind bei Raumtemperatur im Wesentlichen inert und werden durch erhöhte Temperatur, typischerweise bei Temperaturen von 70°C oder mehr, aktiviert, wodurch die Härtungsreaktion gestartet wird. Es können die üblichen latenten Härter für Epoxidharze eingesetzt werden. Es handelt sich bevorzugt um einen latenten Stickstoff enthaltenden Härter für Epoxidharze.

Beispiele für geeignete latente Härter sind Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron), sowie Imidazole und Amin-Komplexe.

Vorzugsweise ist der latente Härter ausgewählt ist aus der Liste bestehend aus Dicyandiamid, Guanaminen, Guanidinen, Aminoguanidinen und deren Derivaten, substituierten Harnstoffen, Imidazolen und Amin-Komplexen.

Besonders bevorzugt als latenter Härter ist Dicyandiamid.

Der latente Härter wird vorzugsweise in einer stöchiometrischen Menge bezogen auf die Epoxidgruppen in der Zusammensetzung eingesetzt. Das molare Verhältnis der Epoxidgruppen zum aktiven Wasserstoff des latenten Härters beträgt vorzugsweise 0.8 bis 1.2, insbesondere 0.9 bis 1.1, bevorzugt 0.95 bis 1.05.

Insbesondere beträgt der Anteil des latenten Härters 0.05 bis 30 Gew.-%, insbesondere 0.1 bis 15 Gew.-%, bevorzugt 0.2 bis 5 Gew.-%, besonders bevorzugt 0.5 bis 3 Gew.-%, bezogen auf das Gesamtgewicht der Zusammensetzung.

Die einkomponentige hitzehärtende Epoxidharzzusammensetzung umfasst 0.25 - 4.5 Gew.-% Aerogelpartikel, bezogen auf das Gesamtgewicht der einkomponentigen hitzehärtenden Epoxidharzzusammensetzung.

Beträgt der Anteil 0.25 - 3.5 Gew.-%, vorzugsweise 0.25 - 2.5 Gew.-%, insbesondere 0.25 - 1.5 Gew.-%, besonders bevorzugt 0.25 - 0.75 Gew.-% Aerogelpartikel, bezogen auf das Gesamtgewicht der einkomponentigen hitzehärtenden Epoxidharzzusammensetzung, ist dies hohen Werten bei der Expansion, insbesondere bei Erwärmung im Bereich von 160°C bis 205°C für 25 - 45 min, zuträglich.

In den Beispielen ist ersichtlich, dass falls mehr als 4.5 Gew.-% Aerogelpartikel eingesetzt wird, die Expansion aufbautechnisch nicht ausreicht, um eine sichere und abschliessende Verbindung mit dem zu verstärkenden Bauteil zu gewährleisten.

Beträgt der Anteil 0.75 - 4.5 Gew.-%, vorzugsweise 1.5 - 4.5 Gew.-%, insbesondere 2.5 - 4.5 Gew.-%, Aerogelpartikel, bezogen auf das Gesamtgewicht der einkomponentigen hitzehärtenden Epoxidharzzusammensetzung, ist dies einer hohen Standfestigkeit zuträglich. In den Beispielen ist unter anderem aus Ref. 2 ist ersichtlich, dass eine Zusammensetzung ohne Aerogelpartikel eine ungenügende Standfestigkeit aufweist.

Beträgt der Anteil 1.5 - 4.5 Gew.-% Aerogelpartikel, bezogen auf das Gesamtgewicht der einkomponentigen hitzehärtenden Epoxidharzzusammensetzung, ist dies hohen Werten der Zugscherfestigkeit H0 zuträglich.

Beträgt der Anteil 1.5 - 4.5 Gew.-%, insbesondere 1.5 - 3.5 Gew.-%, besonders bevorzugt 1.5 - 2.5 Gew.-%, Aerogelpartikel, bezogen auf das Gesamtgewicht der einkomponentigen hitzehärtenden Epoxidharzzusammensetzung, ist dies hohen Werten der Zugscherfestigkeit H7 zuträglich.

Beträgt der Anteil 0.75 - 3.5 Gew.-%, insbesondere 1.5 - 3.5 Gew.-%, Aerogelpartikel, bezogen auf das Gesamtgewicht der einkomponentigen hitzehärtenden Epoxidharzzusammensetzung, ist dies einem geringen Anteil an feinkörnigem Material nach dem Granulierungsschritt zuträglich.

Weiter ist aus Ref. 2 ersichtlich, dass eine Zusammensetzung ohne Aerogelpartikel einen hohen Anteil an feinkörnigem Material nach dem Granulierungsschritt aufweist. Weiter zeigt Ref. 1, dass auch eine Zusammensetzung mit pyrogener Kieselsäure anstelle von Aerogelpartikels einen hohen Anteil an feinkörnigem Material nach dem Granulierungsschritt aufweist.

Beträgt der Anteil 0.75 - 4.5 Gew.-%, vorzugsweise 1.5 - 4.5 Gew.-%, insbesondere 2.5 - 4.5 Gew.-%, Aerogelpartikel, bezogen auf das Gesamtgewicht der einkomponentigen hitzehärtenden Epoxidharzzusammensetzung, ist dies einem hohen DSC Peak 2 zuträglich. Dies führt zu gleichbleibenden mechanischen Eigenschaften über einen breiteren Temperaturbereich.

Besonders bevorzugt beträgt der Anteil 0.75 - 2.5 Gew.-%, vorzugsweise 1 - 2 Gew.-%, Aerogelpartikel, bezogen auf das Gesamtgewicht der einkomponentigen hitzehärtenden Epoxidharzzusammensetzung. Eine solche Epoxidharzzusammensetzung weist eine gute Balance zwischen Expansionsverhalten, geringem Anteil an feinkörnigem Material, Haftung und Standfestigkeit auf.

Unter dem Begriff "Aerogel" wird im vorliegenden Dokument vorzugsweise ein hochporöses Material aus Siliciumoxiden oder Metalloxiden mit geringer Dichte, das durch Bilden eines Gels und anschliessendes Entfernen von Flüssigkeit aus dem Gel hergestellt wird, während die Gelstruktur im Wesentlichen zurückgehalten wird, verstanden.

Bevorzugte erfindungsgemässe Aerogelpartikel haben eine BET-Oberfläche von mehr als 200 m²/g, mehr als 300 m²/g, mehr als 400 m²/g. Besonders bevorzugt sind Aerogelpartikel mit einer Oberfläche von 500 - 1000 m²/g, insbesondere 600 - 800 m²/g. Vorzugsweise wird unter dem Begriff "BET-Oberfläche" "eine BET-Oberfläche, die nach DIN ISO 9277 gemessen wird.

Vorzugsweise beträgt die Partikeldichte der Aerogelpartikel 90-200 kg/m³, insbesondere von 110-190 kg/m³. Vorzugsweise wird unter dem Begriff "Partikeldichte" eine Schüttdichte verstanden, die nach DIN ISO 697 gemessen wird.

Weiterhin bevorzugt sind Aerogelpartikel mit Porengrössen von weniger als 180 nm, insbesondere weniger als 150 nm, weniger als 100 nm, besonders bevorzugt weniger als 50 nm.

Bevorzugt sind Aerogelpartikel basierend auf Siliciumdioxid (SiO₂). Es können jedoch auch Aerogelpartikel basierend auf Metalloxiden verwendet werden, wie beispielsweise Aluminiumoxid (Al₂O₃).

Besonders bevorzugt sind Aerogelpartikel basierend auf synthetischem amorphem Kieselgel, das gegebenenfalls oberflächenmodifiziert sein kann.

Es werden vorzugsweise amorphe Siliciumdioxid-Aerogelpartikel verwendet, die mit Trimethylsilylgruppen oberflächenmodifiziert sind. Solche amorphe Siliciumdioxid-basierte Aerogelpartikel unterscheiden sich von anderen Siliciumdioxidmaterialien wie kristallinem Siliciumdioxid oder anderen amorphen Siliciumdioxidformen wie pyrogenem (fumed) Siliciumdioxid.

Bevorzugt sind Aerogelpartikel mit einer mittleren Partikelgrösse von 0.01 - 5 mm, vorzugsweise 0.1 - 4 mm, insbesondere bevorzugt 1 - 4 mm.

Der Begriff "mittlere Partikelgrösse" bezieht sich hier vorzugsweise auf den D50-Wert der kumulativen Volumenverteilungskurve, bei der 50 Vol.-% der Partikel einen Durchmesser aufweisen, der kleiner als der Wert ist. Die mittlere Partikelgrösse oder der D50-Wert wird vorzugsweise durch Laserdiffraktometrie bestimmt.

Der Fachmann weiß, wie man Aerogelpartikel herstellt. Spezifische Verfahren zur Herstellung von Aerogelpartikeln sind z. B. in WO 2008/115812 A2 (Cabot) oder EP 0699104 B1 (Hoechst) erläutert. Aerogelpartikel sind im Handel aus verschiedenen Quellen erhältlich. Geeignete Aerogelpartikel sind beispielsweise solche, die von Cabot Corp. (Billerica, MA, USA) unter den Handelsnamen Aerogel Partikel P100, 200 und 300 erhältlich sind.

Die Zusammensetzung kann weiterhin zusätzliche Zähigkeitsverbesserer enthalten. Unter einem "Zähigkeitsverbesserer" wird hierbei und im Folgenden ein Zusatz zu einer Epoxidharzmatrix verstanden, der bereits bei geringen Zuschlägen von 0.5 bis 30 Gew.-%, bezogen auf das Gesamtgewicht der Zusammensetzung, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.

Die hitzehärtende Epoxidharzzusammensetzung enthält gegebenenfalls mindestens einen Zähigkeitsverbesserer **D.** Die Zähigkeitsverbesserer **D** können fest oder flüssig sein.

Insbesondere ist der Zähigkeitsverbesserer **D** ausgewählt ist aus der Gruppe bestehend aus endständig blockierten Polyurethanpolymeren **D1,** Flüssigkautschuken **D2** und Core-Shell-Polymeren **D3.**

In einer bevorzugten Ausführungsform ist dieser Zähigkeitsverbesserer **D** ein Flüssigkautschuk **D2,** welcher insbesondere ein Acrylonitil/Butadien-Copolymer ist, welches mit Carboxylgruppen oder (Meth)acrylatgruppen oder Epoxidgruppen terminiert ist, oder ein Derivat davon ist. Derartige Flüssigkautschuke sind beispielsweise unter dem unter dem Namen Hypro^{™}(früher Hycar^{®}) CTBN und CTBNX und ETBN von Emerald Performance Materials LLC kommerziell erhältlich. Als Derivate sind insbesondere Epoxidgruppen aufweisende Elastomer-modifizierte Prepolymere, wie sie unter der Produktelinie Polydis^{®}, vorzugsweise aus der Produktelinie Polydis^{®} 36.., von der Firma Struktol^{®} (Schill+Seilacher Gruppe, Deutschland) oder unter der Produktelinie Albipox (Evonik Hanse GmbH, Deutschland) kommerziell vertrieben werden, geeignet.

Es ist dem Fachmann klar, dass natürlich auch Mischungen von Flüssigkautschuken verwendet werden können, insbesondere Mischungen von carboxyl- oder epoxidterminiertes Acrylnitril/Butadien-Copolymeren oder Derivaten davon mit epoxidterminierten Polyurethanprepolymeren.

Vorzugsweise beträgt der Anteil an Zähigkeitsverbesserer, insbesondere Zähigkeitsverbesserer **D2,** 2-30 Gew.-%, insbesondere 5-10 Gew.-%, bezogen auf das Gesamtgewicht der Epoxidharzzusammensetzung.

In einer weiteren bevorzugten Ausführungsform enthält die Zusammensetzung zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Cristobalit, Calciumoxid, Aluminiumhydroxid, Magnesiumoxid, Keramikhohlkugeln, Glashohlkugeln, organische Hohlkugeln, Glaskugeln, Farbpigmente. Besonders bevorzugt handelt es sich um Füllstoffe ausgewählt aus der Gruppe bestehend aus Calciumcarbonat, Calciumoxid und Glashohlkugeln.

Vorteilhaft beträgt der Anteil des Füllstoffs **F** 3 bis 50 Gew.-%, vorzugsweise 5 bis 40 Gew.-%, insbesondere 8 bis 35 Gew.-%, bezogen auf das Gesamtgewicht der Zusammensetzung.

Weiter kann es vorteilhaft sein, wenn der Anteil von Kieselsäuren (pyrogen oder gefällt), bezogen auf das Gesamtgewicht des Epoxidharzklebstoffs, kleiner als 5 Gewichts-%, kleiner als 2 Gewichts-%, kleiner als 1 Gewichts-%, kleiner als 0.5 Gewichts-%, insbesondere kleiner als 0.1 Gewichts-%, ist. Besonders bevorzugt ist der Epoxidharzklebstoff frei von Kieselsäuren (pyrogen oder gefällt).

Die einkomponentige hitzehärtende Epoxidharzzusammensetzung umfasst mindestens ein Treibmittel. Dabei kann es sich um chemische oder physikalische Treibmittel handeln.

Als chemische Treibmittel werden organische oder anorganische Substanzen bezeichnet, welche unter Einfluss von Temperatur, Feuchtigkeit, elektromagnetischer Strahlung oder Chemikalien gasförmige Substanzen bilden oder abspalten. Derartige Substanzen sind insbesondere Azodicarbonamide, Sulfohydrazide, Hydrogencarbonate oder Carbonate. Als physikalische Treibmittel können Verbindungen eingesetzt werden, welche beispielsweise bei Änderung der Temperatur, des Drucks oder des Volumens, insbesondere bei Erhöhung der Temperatur, in den gasförmigen Aggregatzustand übergehen und so durch Volumenexpansion eine Schaumstruktur bilden. Insbesondere sind solche physikalischen Treibmittel Flüssigkeiten, welche bei erhöhter Temperatur verdampfen. Weiterhin können als physikalische Treibmittel Gase oder niedrigsiedende Flüssigkeiten eingesetzt werden, welche in mikroverkapselter Form in die Zusammensetzung eingebracht werden. Sowohl chemische als auch physikalische Treibmittel sind in der Lage Schaumstrukturen in Polymerzusammensetzungen zu erzeugen.

Bevorzugte Treibmittel sind physikalische Treibmittel. Besonders bevorzugte physikalische Treibmittel sind expandierbare Mikrokügelchen, bestehend aus einer thermoplastischen Schale, die mit thermisch expandierbaren Flüssigkeiten oder Gasen gefüllt ist. Derartige Mikrosphären sind beispielsweise kommerziell erhältlich unter dem Handelsnamen Expancel^{®} von der Firma Akzo Nobel, Niederlande.

Das Treibmittel ist vorzugsweise bei einer Temperatur von ≤ 160°C, insbesondere von 80°C bis 150°C, bevorzugt von 90°C bis 140°C, schäumbar. Der Anteil des Treibmittels beträgt vorteilhaft 0.1 - 5 Gew.-%, vorzugsweise 0.1 - 3 Gew.-%, insbesondere 1 - 2 Gew.-%, bezogen auf Gesamtgewicht der Epoxidharzzusammensetzung.

Die schäumbare thermoplastische Mischung kann ferner ein oder mehrere Additive enthalten. Beispiele für gegebenenfalls einsetzbare Additive sind Verarbeitungshilfsmittel wie Wachse, Antioxidantien, UV-Stabilisatoren, Farbstoffe, Biozide oder Flammschutzmittel.

Vorteilhaft beträgt der Anteil des Verarbeitungshilfsmittels 1 bis 8 Gew.-%, vorzugsweise 2 bis 5 Gew.-%, bezogen auf das Gesamtgewicht der Zusammensetzung.

Die einkomponentige hitzehärtende Epoxidharzzusammensetzung weist einen Schmelzflussindex (MFI) von 10 - 80 g/10 min, insbesondere 20 - 80 g/10 min, bevorzugt 30 - 50 g/10 min, auf.

Der MFI wird bei 110°C, 2,16 kg gemäß ASTM D1238 bestimmt, vorzugsweise bei einer Aufschmelzzeit von 120 Sekunden.

Bei der schäumbaren thermoplastischen Mischung handelt es sich vorzugsweise um eine spritzgießfähige Mischung, d.h. die Mischung weist bei den Verarbeitungstemperaturen eine zum Spritzgießen geeignete Viskosität auf. Sie ist insbesondere spritzgießfähig ohne aufzuschäumen.

Eine besonders bevorzugte einkomponentige hitzehärtende Epoxidharzzusammensetzung umfasst:
- 30 - 90 Gew.-%, insbesondere 35 bis 85 Gew.-%, bevorzugt 40 bis 75 Gew.%, bezogen auf das Gesamtgewicht der Epoxidharzzusammensetzung, Epoxid-Festharzes **EP;**
- gegebenenfalls 0.1 bis 20 Gew.-%, vorzugsweise 0.1 bis 15 Gew.-%, insbesondere 0.1 bis 5 Gew.-%, bezogen auf das Gesamtgewicht der Epoxidharzzusammensetzung, Epoxid-Flüssigharz;
- 0.05 bis 30 Gew.-%, insbesondere 0.1 bis 15 Gew.-%, bevorzugt 0.2 bis 5 Gew.-%, besonders bevorzugt 0.5 bis 3 Gew.-%, bezogen auf das Gesamtgewicht der Epoxidharzzusammensetzung, latenter Härter;
- 0.75 - 2.5 Gew.-%, vorzugsweise 1 - 2 Gew.-%, bezogen auf das Gesamtgewicht der Epoxidharzzusammensetzung, Aerogelpartikel;
- 2-30 Gew.-%, insbesondere 5-10 Gew.-%, bezogen auf das Gesamtgewicht der Epoxidharzzusammensetzung, Zähigkeitsverbesserer, insbesondere Zähigkeitsverbesserer **D2;**
- gegebenenfalls 1 bis 8 Gew.-%, vorzugsweise 2 bis 5 Gew.-%, bezogen auf das Gesamtgewicht der Epoxidharzzusammensetzung, Verarbeitungshilfsmittel;
- 3 bis 50 Gew.-%, vorzugsweise 5 bis 40 Gew.-%, insbesondere 8 bis 35 Gew.-%, bezogen auf das Gesamtgewicht der Epoxidharzzusammensetzung, Füllstoffs **F;**
- 0.1 - 3 Gew.-%, insbesondere 1 - 2 Gew.-%, bezogen auf das Gesamtgewicht der Epoxidharzzusammensetzung, Treibmittel.

Weiter kann es vorteilhaft sein, wenn die bevorzugte einkomponentige hitzehärtende Epoxidharzzusammensetzung zu mehr als 80 Gewichts-%, vorzugsweise mehr als 90 Gewichts-%, insbesondere mehr als 95 Gewichts-%, insbesondere bevorzugt mehr als 98 Gewichts-%, am meisten bevorzugt mehr als 99 Gewichts-%, bezogen auf das Gesamtgewicht der Epoxidharzzusammensetzung, aus den vorgenannten Bestandteilen besteht.

Beispiele von besonders bevorzugten Zusammensetzungen sind die Beispiele E-2 und E-3 in Tabelle 1.

Die einkomponentige hitzehärtende Epoxidharzzusammensetzung ist bei Raumtemperatur (23°C) fest. Vorzugsweise ist die einkomponentige hitzehärtende Epoxidharzzusammensetzung bei 23°C klebfrei. Unter dem Begriff "klebfrei" wird hier eine Soforthaftung oder "Tack" verstanden, welche bei 23°C so gering ist, dass beim Drücken mit einem Daumen mit einem Druckaufwand von ca. 5 kg für 1 Sekunde auf die Oberfläche der einkomponentigen hitzehärtenden Epoxidharzzusammensetzung der Daumen nicht auf der Oberfläche der Haftschicht kleben bleibt bzw. die einkomponentige hitzehärtende Epoxidharzzusammensetzung nicht angehoben werden kann.

Die Zusammensetzungen gemäß den vorliegenden Erfindungen können durch Mischen der Komponenten in irgendeiner geeigneten Mischvorrichtung erhalten werden, z.B. In einem Dispersionsmischer, Planetenmischer, Doppelschneckenmischer, Durchlaufmischer, Extruder oder Doppelschneckenextruder.

Nach dem Mischen kann die resultierende Zusammensetzung durch z.B. Extrudieren, Blasformen, Pelletieren, Spritzgießen, Formpressen, Stanzen oder Stanzen oder irgendein anderes geeignetes Verfahren in ihre gewünschte Form geformt werden.

Vorzugsweise umfasst das Mischen der Komponenten einen Extrusionsschritt, wobei die gemischte und extrudierte Zusammensetzung anschliessend granuliert wird. Die granulierte Zusammensetzung wird danach vorzugsweise durch Spritzgießen in ihre gewünschte Form gebracht.

Die granulierte Zusammensetzung besteht vorzugsweise aus Granulatpartikeln mit einer mittleren Partikelgrösse von 1 - 8 mm. Granulatpartikeln mit einer mittleren Partikelgrösse von weniger als 1 mm werden im vorliegenden Dokument auch als feinkörniges Material bezeichnet.

Diese Granulatpartikel mit einer mittleren Partikelgrösse von weniger als 1 mm sind dahingehend von Nachteil, dass diese unter anderem zu Ablagerungen in den Spritzgussmaschinen führen können, was zu zeitaufwändigen Reinigungen führen kann. Weiter kann ein hoher Anteil an diesem feinkörnigen Material das Einzugsverhalten im Extruder des nachfolgenden Spritzgussverfahrens behindern. Aus den vorgehend genannten Gründen kann es daher nötig sein, bei einem hohen Anteil an diesem feinkörnigen Material dieses vom Granulat zu trennen. Der resultierende Materialverlust und die aufwändige Abtrennung des feinkörnigen Materials sind zeit- und kostenintensiv.

Vorzugsweise weist die granulierte Zusammensetzung einen Anteil von Granulatpartikeln mit einer mittleren Partikelgrösse von weniger als 1 mm von 10 Gew.-% oder weniger, insbesondere 5 Gew.-% oder weniger, vorzugsweise 2.5 Gew.-% oder weniger, auf, bezogen auf das Gesamtgewicht der granulierten Zusammensetzung.

Vorzugsweise wird die Schäumung der einkomponentige hitzehärtende Epoxidharzzusammensetzung unabhängig von der Aushärtung der Epoxidharzzusammensetzung, insbesondere vorher, ausgeführt. Dadurch erfolgt die Aushärtung der Epoxidharzzusammensetzung erst, wenn die Schäumung der Epoxidharzzusammensetzung grösstenteils stattgefunden hat. Andernfalls härtet die Epoxidharzzusammensetzung aus bevor sie durch die Schäumung den vorgesehenen Platz erreicht hat.

Es ist daher bevorzugt, dass die Aushärtungstemperatur der Epoxidharzzusammensetzung oberhalb der Schäumungstemperatur der Epoxidharzzusammensetzung liegt.

Ein weiterer Aspekt der Erfindung sind Verstärkungselemente umfassend die einkomponentige hitzehärtende Epoxidharzzusammensetzung, insbesondere zur Verstärkung in Hohlräumen von strukturellen Bauteilen.

Vorzugsweise wird die einkomponentige hitzehärtende Epoxidharzzusammensetzung an einem Trägerteil aufgetragen bzw. befestigt.

Dieses Trägerteil kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder beliebige Kombinationen dieser Materialien.

Weiterhin kann das Trägerteil einen beliebigen Aufbau und eine beliebige Struktur aufweisen. Es kann beispielsweise massiv oder hohl sein oder eine gitterartige Struktur aufweisen. Die Oberfläche des Trägerteils kann typischerweise glatt, rau oder strukturiert sein. Das Trägerteil kann zusätzlich zur seiner Funktion als Träger für das schäumbare Material zur strukturellen Verstärkung beitragen.

Es ist auch möglich, dass Verstärkungselemente kein Trägerteil aufweisen und vollständig aus der einkomponentigen hitzehärtenden Epoxidharzzusammensetzung bestehen.

Die Herstellung der Verstärkungselemente umfassend ein Trägerteil sowie die einkomponentige hitzehärtende Epoxidharzzusammensetzung erfolgt vorzugsweise im Spritzgussverfahren.

Besteht das Trägerteil aus einem durch Spritzguss verarbeitbaren Material, wird üblicherweise ein Zweikomponenten-Spritzgussverfahren eingesetzt. Dabei wird zuerst eine erste Komponente, in diesem Fall das Trägerteil, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall die Epoxidharzzusammensetzung, wird mit einem zweiten Spritzaggregat an die erste Komponente angespritzt. Besteht das Trägerteil aus einem Material, welches sich nicht durch das Spritzgussverfahren herstellen lässt, also beispielsweise aus einem Metall, wird das Trägerteil in ein entsprechendes Werkzeug gelegt und die Epoxidharzzusammensetzung wird an das Trägerteil angespritzt.

Selbstverständlich besteht auch die Möglichkeit die Epoxidharzzusammensetzung durch beliebige andere Befestigungsmittel oder Verfahren an ein Trägerteil zu befestigen.

Für die genannten Verstärkungselemente ist es weiter vorteilhaft, wenn die Epoxidharzzusammensetzung thermisch, bei einer Temperatur von ≤ 160°C, insbesondere von 80°C bis 150°C, bevorzugt von 90°C bis 140°C, schäumbar ist und wenn die Epoxidharzzusammensetzung bei einer Temperatur von ≥ 140°C, insbesondere von 150°C bis 220°C, bevorzugt von 160°C bis 200°C, aushärtet.

Weiterhin umfasst die Erfindung die Verwendung eines Verstärkungselements, wie es vorhergehend beschrieben wurde, zur Verstärkung von Hohlräumen von strukturellen Bauteilen. Vorzugsweise werden derartige strukturelle Bauteile in Karosserien und/oder Rahmen von Transport- und Fortbewegungsmitteln, insbesondere von Fahrzeugen zu Wasser oder zu Land oder von Luftfahrzeugen, eingesetzt. Bevorzugt umfasst die Erfindung die Verwendung eines erfindungsgemässen Verstärkungselements in Karosserien oder Rahmen von Automobilen (insbesondere A-, B-, C-, oder D-Säulen) Lastkraftwagen, Eisenbahnwagen, Booten, Schiffen, Hubschraubern und Flugzeugen, meist bevorzugt in Automobilen.

Weiterhin umfasst die Erfindung ein Verfahren zur Verstärkung von strukturellen Bauteilen umfassend die Schritte
i) Platzieren des Verstärkungselements gemäss vorhergehender Beschreibung in einem Hohlraum;
ii) Schäumen der einkomponentigen hitzehärtenden Epoxidharzzusammensetzung, wie sie vorgehend beschrieben wurde; und
iii) Aushärten der härtenden einkomponentigen hitzehärtenden Epoxidharzzusammensetzung.

Insbesondere umfasst die Erfindung ein Verfahren zur Verstärkung von strukturellen Bauteilen, wobei die einkomponentige hitzehärtende Epoxidharzzusammensetzung thermisch schäumbar ist. Schritt ii) umfasst somit das Erhöhen der Temperatur auf die Schäumungstemperatur der Epoxidharzzusammensetzung. Diese Temperatur ist ≤ 160°C, insbesondere 80°C bis 150°C, bevorzugt 90°C bis 140°C. Der Schritt iii) ist ein Schritt iii') des Erhöhens der Temperatur auf die Aushärtungstemperatur der einkomponentigen hitzehärtenden Epoxidharzzusammensetzung. Diese Temperatur ist ≥ 140°C, insbesondere 150°C bis 220°C, bevorzugt 160°C bis 200°C.

Weiterhin umfasst die Erfindung die Verwendung von Aerogelpartikeln, wie sie beschrieben sind, zur Erhöhung der Standfestigkeit bei Aushärtung bei 175°C für 25 min eines einkomponentigen hitzehärtenden Epoxidharzklebstoffs im Fahrzeugbau. Vorzugsweise handelt es sich um einen hitzehärtenden Epoxidharzklebstoff wie er vorgehend beschrieben wurde. Die Erhöhung der Standfestigkeit bezieht sich auf den Vergleich zu einkomponentigen hitzehärtenden Epoxidharzklebstoffen welche keine Aerogelpartikel enthalten. Die Bestimmung der Standfestigkeit erfolgt vorzugsweise gemäss dem im Beispielteil verwendeten Verfahren.

### Beispiele

Im Folgenden werden einige Beispiele aufgeführt, welche die Erfindung weiter veranschaulichen, den Umfang der Erfindung aber in keiner Weise beschränken sollen.

| | |
|---|---|
| Epoxyfestharz | Epoxid-Festharz, (Bisphenol-A-diglycidylether-basiert), Dow |
| D-2 | Epoxidharz-modifiziertes CTBN |
| Glasfasern | Füllstoff |
| pyrogene Kieselsäure | Pyrogene Kieselsäure, Wacker |
| Aerogelpartikel | Aerogel Cabot P300, Cabot Corp. (Billerica, MA, USA) |
| Füllstoffgemisch | Gemisch aus Calciumcarbonat und Calciumoxid |
| Glashohlkugeln | Füllstoff |
| Prozesswachs | Luwax, Ethylenhomopolymer-Wachs BTC Europe |
| Dicy | Dicyandiamid |
| substituierter Harnstoff | Beschleuniger |
| Treibmittel | physikalisches Treibmittel, Expancel, Akzo Nobel, Niederlande |

| | |
|---|---|
| Eingesetzte Rohstoffe. | |

### Herstellung der Zusammensetzungen

Es wurden gemäss Angaben in der Tabelle 1 die Referenzzusammensetzungen ***Ref.1*** - ***Ref.* 5** sowie die erfindungsgemässen Zusammensetzungen ***E-1*** - ***E-5*** hergestellt. Die Mengenangaben in der Tabelle 1 sind in Gewichtsteilen.

Die eingesetzten Rohstoffe wurden mit einem Taumelmischer für 10 min gemischt.

Die Mischungen wurden anschliessend mit einem Durchsatz von 2,5kg pro Stunde in einen Compounder (Dr. Collin ZK 25 T SCD15) eingebracht. Der Austrag erfolgte durch eine 1-Lochdüse (3mm) auf ein Förderband. Der erhaltene Strang wurde mit forcierter Luft gekühlt und anschliessend mittels des im System integrierten Dr.Collin Granulator granuliert.

Die granulierte Zusammensetzung wurde auf den Gewichtsanteil der Granulatpartikel mit einer mittleren Partikelgrösse von weniger als 1 mm bezogen auf das Gesamtgewicht der granulierten Zusammensetzung geprüft und folgendermassen beurteilt:
-- = übermässiger Gewichtsanteil, mehr als 15 Gew.-%*
- = hoher Gewichtsanteil, 10 - 15 Gew.-%*
O = mässiger Gewichtsanteil, 5 - weniger als 10 Gew.-%*
+ = geringer Gewichtsanteil, 2.5 - weniger als 5 Gew.-%*
++ = sehr geringer Gewichtsanteil, 0 - weniger als 2.5 Gew.-%*
(*, Gewichtsanteil in Gew.-% von Granulatpartikel mit einer mittleren Partikelgrösse von weniger als 1 mm bezogen auf das Gesamtgewicht der granulierten Zusammensetzung)

Das erhaltene Granulat wurde anschliessend mittels einer Krauss-Maffei 110t Spritzgussmaschine zu 3 mm dicken Platten verarbeitet.

Mit den erhaltenen Prüfkörpern wurden folgende Messungen durchgeführt:

### Prüfmethoden:

### Schmelzflussindex (MFI), 110°C, 2,16 kg gemäß ASTM D1238

Der MFI wurde mittels eines Kapillarrheometers ermittelt, wobei das Granulat erst in einem beheizbaren Zylinder mit einer Aufschmelzzeit von 120 Sekunden aufgeschmolzen, komprimiert und unter einem durch die Auflagelast (Gewicht) durch eine definierte Düse (2.046mm) gedrückt wurde. Ermittelt wurde die austretende Masse der Polymerschmelze. Diese wurde anschliessend auf einer Analysenwaage ausgewogen und mittels der entsprechenden Formel (MFI = Masse/10min) wurde der MFI berechnet. Die Einheit für den MFI wird daher in g/10min angegeben.

### Zugscherfestigkeit (ZSF) (DIN EN 1465)

Zwischen zwei Stahlprüfkörper HC420LAD+Z100MBO, 100x25x1.2mm wurde auf einer Fläche von 25 × 10mm eine Probe der Platten aus den erhaltenen Zusammensetzungen (Dicke 3mm) angeordnet und für 45 min bei 175°C Ofentemperatur expandiert/ausgehärtet.

Die Probenkörper wurden entweder unmittelbar nach Abkühlung auf Raumtemperatur (H0) oder nach 7 Tagen Lagerung (H7) gemessen.

Bei der 7 Tage Lagerung wurde der Probenkörper mit in Wasser getränkter Watte umwickelt, verschlossen in einem versiegelten Polyethylen Beutel gelagert. Anschliessend werden die Prüfkörper für 7 Tage bei 70°C gelagert. Nach der Entnahme werden die Prüfkörper entwickelt und direkt für 2 Stunden in einer Klimakammer bei -20°C gelagert. Nach der erneuten Entnahme werden die Prüfkörper auf Raumtemperatur bebracht, abgetrocknet und gemessen. Die Zugscherfestigkeit wurde auf einer Zugmaschine bei einer Zuggeschwindigkeit von 10mm/min in einer 3-fach Bestimmung gemäss DIN EN 1465 bestimmt.

### Bestimmung Schaumdichte / Volumenexpansion (Expansion)

Die Expansionsstabilität wurde in allen Proben durch Wärmebehandlung der einzelnen Proben bei verschiedenen Temperaturen und unterschiedlichen Zeiträume (30 min bei 160°C, 25 min bei 175°C, resp. 45 min bei 205°C) in einem Ofen getestet. Die Temperaturen, Zeiträume und Ausmasse der Ausdehnung (in % bezogen auf das ursprüngliche Volumen vor der Expansion) sind in Tabelle 1 dargestellt.

Expansionen wurden für jede Probe durch Messung der Dichte vor und nach der Expansion quantifiziert. Die Dichten wurden nach DIN EN ISO 1183 nach der Wassereintauchmethode (Archimedes-Prinzip) in deionisiertem Wasser und einer Präzisionswaage zur Messung der Masse bestimmt

### Bestimmung Standfestigkeiten

Substrat: Stahlprüfkörper Feuerverzinkt DX51D+Z275, 200×100×0.5mm. Die vorgenannten Substrate wurden erst mit Aceton gereinigt (Fettfrei). Danach wurden zwei 3mm Platten aus den erhaltenen Zusammensetzungen bei 90°C zu einer 5mm Platte gepresst (Plattenpresse Dr.Collin) und auf 80x50x5mm zugeschnitten. Mit Aluklammern werden die Platten anschliessend quer an den Substraten befestigt und für 25 min bei 175°C in vertikaler Position im Ofen ausgehärtet. Mit Hilfe eines Massstabes wurde abschliessend die Abrutschdistanz gemessen und nummerisch festgehalten.

**Tabelle 1**

| | | Ref.1 | Ref.2 | E-1 | E-2 | E-3 | E-4 | E-5 | Ref.3 | Ref.4 | Ref.5 |
|---|---|---|---|---|---|---|---|---|---|---|---|
| Epoxyfestharz | [%] | 52.60 | 55.60 | 55.10 | 54.60 | 53.60 | 52.60 | 51.60 | 50.60 | 49.60 | 47.60 |
| D-2, CTBN | [%] | 7.00 | 7.00 | 7.00 | 7.00 | 7.00 | 7.00 | 7.00 | 7.00 | 7.00 | 7.00 |
| Glasfasern | [%] | 12.36 | 12.36 | 12.36 | 12.36 | 12.36 | 12.36 | 12.36 | 12.36 | 12.36 | 12.36 |
| pyrog. Kieselsäure | [%] | 3.00 | | | | | | | | | |
| Aerogelpartikel | [%] | | | 0.50 | 1.00 | 2.00 | 3.00 | 4.00 | 5.00 | 6.00 | 8.00 |
| Füllstoffgemisch | [%] | 9.15 | 9.15 | 9.15 | 9.15 | 9.15 | 9.15 | 9.15 | 9.15 | 9.15 | 9.15 |
| Glashohlkugeln | [%] | 9.77 | 9.77 | 9.77 | 9.77 | 9.77 | 9.77 | 9.77 | 9.77 | 9.77 | 9.77 |
| Prozesswachs | [%] | 2.88 | 2.88 | 2.88 | 2.88 | 2.88 | 2.88 | 2.88 | 2.88 | 2.88 | 2.88 |
| Dicy | [%] | 1.36 | 1.36 | 1.36 | 1.36 | 1.36 | 1.36 | 1.36 | 1.36 | 1.36 | 1.36 |
| subst. Harnstoff | [%] | 0.38 | 0.38 | 0.38 | 0.38 | 0.38 | 0.38 | 0.38 | 0.38 | 0.38 | 0.38 |
| Treibmittel | [%] | 1.50 | 1.50 | 1.50 | 1.50 | 1.50 | 1.50 | 1.50 | 1.50 | 1.50 | 1.50 |
| TOTAL | [%] | 100 | 100 | 100 | 100 | 100 | 100 | 100 | 100 | 100 | 100 |
| | | | | | | | | | | | |
| Expansion 30'@160°C | [%] | 130 | 123 | 125 | 124 | 122 | 112 | 96 | 59 | 54 | 29 |
| Expansion 25'@175°C | [%] | 149 | 148 | 159 | 149 | 144 | 119 | 109 | 62 | 57 | 30 |
| Expansion 45'@205°C | [%] | 181 | 178 | 178 | 182 | 157 | 128 | 119 | 65 | 60 | 30 |
| MFR 110°C/2.16kg | [g/10min] | 51.22 | 100.08 | 73.64 | 49.24 | 35.47 | 23.31 | 10.69 | 3.34 | 0.09 | 0.01 |
| Zugscherfestigkeit HO | [MPa] | 2.79 | 2.76 | 2.28 | 2.45 | 3.29 | 4.24 | 4.89 | 5.35 | 5.24 | 2.77 |
| Zugscherfestigkeit H7 | [MPa] | 2.53 | 1.97 | 1.86 | 1.95 | 2.64 | 2.54 | 2.20 | 1.76 | 1.77 | 1.11 |
| Abrutschtest | [mm] | 8 | 54 | 15 | 8 | 6 | 5 | 5 | 3 | 2 | 0 |
| DSC Peak 1 (Glasumwandlung) | [°C] | 106 | 107 | 107 | 107 | 107 | 105 | 107 | 106 | 107 | 106 |
| DSC Peak 2 | [°C] | 169 | 169 | 170 | 171 | 173 | 174 | 175 | 177 | 178 | 179 |
| Gewichtsanteil feinkörniges Material | | - | - | ∘ | + | ++ | ++ | ∘ | - | -- | - |

## Patentansprüche

1. Einkomponentige hitzehärtende Epoxidharzzusammensetzung umfassend
mindestens ein Epoxid-Festharz **EP;**
mindestens einen latenten Härter für Epoxidharze;
mindestens ein Treibmittel;
0.25 - 4.5 Gew.-% Aerogelpartikel, bezogen auf das Gesamtgewicht der einkomponentigen hitzehärtenden Epoxidharzzusammensetzung,
wobei die einkomponentige hitzehärtende Epoxidharzzusammensetzung einen Schmelzflussindex (MFI) von 10 - 80 g/10 min, insbesondere 20 - 80 g/10 min, bevorzugt 30 - 50 g/10 min, aufweist, wobei der MFI bei 110°C, 2,16 kg gemäss ASTM D1238 bestimmt wird.

2. Einkomponentige hitzehärtende Epoxidharzzusammensetzung nach Anspruch 1, wobei es sich um amorphe Siliciumdioxid-Aerogelpartikel handelt, insbesondere mit Trimethylsilylgruppen oberflächenmodifizierte Siliciumdioxid-Aerogelpartikel.

3. Einkomponentige hitzehärtende Epoxidharzzusammensetzung nach Anspruch 1 oder 2, wobei die Partikeldichte der Aerogelpartikel 90-200 kg/m³, insbesondere von 110-190 kg/m³, beträgt, wobei unter dem Begriff "Partikeldichte" eine Schüttdichte verstanden wird, gemessen nach DIN ISO 697.

4. Einkomponentige hitzehärtende Epoxidharzzusammensetzung nach einem der vorgehenden Ansprüche, ferner umfassend mindestens einen Zähigkeitsverbesserer **D,** insbesondere ausgewählt aus der Gruppe bestehend aus endständig blockierten Polyurethanpolymeren **D1,** Flüssigkautschuken **D2** und Core-Shell-Polymeren **D3.**

5. Einkomponentige hitzehärtende Epoxidharzzusammensetzung nach irgendeinem der vorgehenden Ansprüche, wobei der latente Härter ausgewählt ist aus Dicyandiamid, Guanaminen, Guanidinen, Aminoguanidinen und deren Derivaten, substituierten Harnstoffen, Imidazolen und Amin-Komplexen, wobei Dicyandiamid bevorzugt ist.

6. Verwendung einer einkomponentigen hitzehärtenden Epoxidharzzusammensetzung gemäss einem der Ansprüche 1 bis 5 als schäumbare, hitzehärtende Zusammensetzung für die Verstärkung in Hohlräumen von strukturellen Bauteilen und Verstärkungselemente.

7. Verstärkungselement umfassend eine einkomponentige hitzehärtende Epoxidharzzusammensetzung gemäss einem der Ansprüche 1 bis 5, insbesondere zur Verstärkung in Hohlräumen von strukturellen Bauteilen.

8. Verstärkungselement gemäss Anspruch 7,
**dadurch gekennzeichnet,**
**dass** die Epoxidharzzusammensetzung thermisch, bei einer Temperatur von ≤ 160 °C, insbesondere von 80 °C bis 150 °C, bevorzugt von 90 °C bis 140 °C, schäumbar ist und
**dass** die Epoxidharzzusammensetzung bei einer Temperatur von ≥ 140 °C, insbesondere von 150 °C bis 220 °C, bevorzugt von 160 °C bis 200 °C, aushärtet.

9. Verstärkungselement gemäss einem der Ansprüche 7 bis 8,
**dadurch gekennzeichnet,**
**dass** die Epoxidharzzusammensetzung an einem Trägerteil befestigt ist, vorzugsweise ist das Trägerteil aus einem Kunststoff, insbesondere Polyurethan oder Polyamid, oder aus einem Metall, insbesondere Aluminium oder Stahl oder aus einer Kombination von Kunststoff und Metall, aufgebaut.

10. Verwendung eines Verstärkungselements gemäss einem der Ansprüche 7 bis 9 zur Verstärkung in Hohlräumen von strukturellen Bauteilen.

11. Verwendung gemäss Anspruch 10 zur Verstärkung in Hohlräumen von strukturellen Bauteilen in Karosserien und/oder Rahmen von Transport- und Fortbewegungsmitteln, insbesondere von Fahrzeugen zu Wasser oder zu Land oder von Luftfahrzeugen, bevorzugt von Automobilen, Lastkraftwagen, Eisenbahnwagen, Booten, Schiffen, Hubschraubern und Flugzeugen.

12. Verfahren zur Verstärkung in Hohlräumen von strukturellen Bauteilen umfassend die Schritte
i) Platzieren eines Verstärkungselements gemäss einem der Ansprüche 7 bis 9 in einem Hohlraum;
ii) Schäumen der einkomponentigen hitzehärtenden Epoxidharzzusammensetzung; und
iii) Aushärten der einkomponentigen hitzehärtenden Epoxidharzzusammensetzung.

13. Verfahren gemäss Anspruch 12,
**dadurch gekennzeichnet,**
**dass** die einkomponentige hitzehärtende Epoxidharzzusammensetzung thermisch schäumbar ist und dass der Schritt ii) das Erhöhen der Temperatur auf die Schäumungstemperatur der Epoxidharzzusammensetzung umfasst, wobei diese Temperatur ≤ 160°C, insbesondere 80°C bis 150°C, bevorzugt 90°C bis 140°C ist; und
**dass** der Schritt iii) ein Schritt iii') des Erhöhens der Temperatur auf die Aushärtungstemperatur der Epoxidharzzusammensetzung ist, wobei diese Temperatur ≥ 140°C, insbesondere 150°C bis 220°C, bevorzugt 160°C bis 200°C, ist.

14. Verwendung von Aerogelpartikeln, wie sie in dem einkomponentigen hitzehärtenden Epoxidharzklebstoff gemäss einem der Ansprüche 1 bis 6 beschrieben sind, zur Erhöhung der Standfestigkeit bei Aushärtung bei 175°C für 25 min eines einkomponentigen hitzehärtenden Epoxidharzklebstoffs im Fahrzeugbau.

## Claims

1. One-component thermosetting epoxy resin composition comprising
at least one solid epoxy resin **EP;**
at least one latent curing agent for epoxy resins;
at least one blowing agent; 0.25% to 4.5% by weight of aerogel particles, based on the total weight of the one-component thermosetting epoxy resin composition,
wherein the one-component thermosetting epoxy resin composition has a melt flow index (MFI) of 10-80 g/10 min, especially 20-80 g/10 min, preferably 30-50 g/10 min, the MFI being determined at 110°C and 2.16 kg in accordance with ASTM D1238.

2. One-component thermosetting epoxy resin composition according to Claim 1, wherein this concerns amorphous silica aerogel particles, especially silica aerogel particles surface-modified with trimethylsilyl groups.

3. One-component thermosetting epoxy resin composition according to Claim 1 or 2, wherein the particle density of the aerogel particles is 90-200 kg/m³, especially 110-190 kg/m³, the term "particle density" being understood as meaning "bulk density" measured in accordance with DIN ISO 697.

4. One-component thermosetting epoxy resin composition according to one of the preceding claims, further comprising at least one toughness improver **D**, selected especially from the group consisting of terminally blocked polyurethane polymers **D1**, liquid rubbers D2 and core-shell polymers D3.

5. One-component thermosetting epoxy resin composition according to any of the preceding claims, wherein the latent curing agent is selected from dicyandiamide, guanamines, guanidines, aminoguanidines and derivatives thereof, substituted ureas, imidazoles and amine complexes, preference being given to dicyandiamide.

6. Use of a one-component thermosetting epoxy resin composition according to one of Claims 1 to 5 as a foamable thermosetting composition for the reinforcement of voids in structural components and reinforcing elements.

7. Reinforcing element comprising a one-component thermosetting epoxy resin composition according to one of Claims 1 to 5, especially for the reinforcement of voids in structural components.

8. Reinforcing element according to Claim 7, **characterized in that**
the epoxy resin composition is thermally foamable at a temperature of ≤ 160°C, especially of from 80°C to 150°C, preferably from 90°C to 140°C, and **in that** the epoxy resin composition cures at a temperature of ≥ 140°C, especially of from 150°C to 220°C, preferably from 160°C to 200°C.

9. Reinforcing element according to one of Claims 7 and 8, **characterized in that**
the epoxy resin composition is affixed to a support component, preferably the support component is constructed from a synthetic material, especially polyurethane or polyamide, or from a metal, especially aluminium or steel, or from a combination of synthetic material and metal.

10. Use of a reinforcing element according to one of Claims 7 to 9 for the reinforcement of voids in structural components.

11. Use according to Claim 10 for the reinforcement of voids in structural components in vehicle bodies and/or frames of means of transport and conveyance, especially of aquatic or terrestrial vehicles or of airborne vehicles, preferably of automobiles, lorries, railway carriages, boats, ships, helicopters and aircraft.

12. Method for the reinforcement of voids in structural components, comprising the steps of
i) positioning in a void a reinforcing element according to one of Claims 7 to 9;
ii) foaming the one-component thermosetting epoxy resin composition; and
iii) curing the one-component thermosetting epoxy resin composition.

13. Method according to Claim 12,
**characterized in that**
the one-component thermosetting epoxy resin composition is thermally foamable and **in that** step ii) includes raising the temperature to the foaming temperature of the epoxy resin composition, this temperature being ≤ 160°C, especially 80°C to 150°C, preferably 90°C to 140°C; and **in that**
step iii) is a step iii') of increasing the temperature to the curing temperature of the epoxy resin composition, this temperature being ≥ 140°C, especially 150°C to 220°C, preferably 160°C to 200°C.

14. Use of aerogel particles, as described in the one-component thermosetting epoxy resin adhesive according to one of Claims 1 to 6, for increasing the sag resistance during curing at 175°C for 25 min of a one-component thermosetting epoxy resin adhesive in vehicle construction.

## Revendications

1. Composition de résines époxydes thermodurcissable monocomposant comprenant
au moins une résine époxyde solide **EP** ;
au moins un durcisseur latent pour résines époxydes ;
au moins un agent d'expansion ;
0,25 à 4,5 % en poids de particules d'aérogel, par rapport au poids total de la composition de résines époxydes thermodurcissable monocomposant,
la composition de résines époxydes thermodurcissable monocomposant présentant un indice de fluidité (MFI) de 10 à 80 g/10 min, en particulier de 20 à 80 g/10 min, de préférence de 30 à 50 g/10 min, le MFI étant déterminé à 110 °C sous 2,16 kg selon ASTM D1238.

2. Composition de résines époxydes thermodurcissable monocomposant selon la revendication 1, pour ce qui concerne laquelle il s'agit d'une particule amorphe d'aérogel de dioxyde de silicium, en particulier de particules d'aérogel de dioxyde de silicium modifiées en surface par des groupes triméthylsilyle.

3. Composition de résines époxydes thermodurcissable monocomposant selon la revendication 1 ou 2, la masse volumique des particules d'aérogel étant de 90 à 200 kg/m³, en particulier de 110 à 190 kg/m³, la « masse volumique des particules » étant une masse volumique apparente, mesurée selon DIN ISO 697.

4. Composition de résines époxydes thermodurcissable monocomposant selon l'une des revendications précédentes, comprenant en outre au moins un agent améliorant la viscosité D, de préférence choisi dans le groupe consistant en les polymères de polyuréthane bloqués en bout **D1,** les caoutchoucs liquides **D2** et les polymères cœur-écorce **D3.**

5. Composition de résines époxydes thermodurcissable monocomposant selon l'une quelconque des revendications précédentes, le durcisseur latent étant choisi parmi le dicyanodiamide, les guanamines, les guanidines, les aminoguanidines et leurs dérivés, les urées substituées, les imidazoles et les complexes d'amine, de préférence le dicyanodiamide.

6. Utilisation d'une composition de résines époxydes thermodurcissable monocomposant selon l'une des revendications 1 à 5 en tant que composition thermodurcissable expansible pour le renforcement, dans les cavités, de composants de construction structurels et d'éléments de renforcement.

7. Élément de renforcement comprenant une composition de résines époxydes thermodurcissable monocomposant selon l'une des revendications 1 à 5, en particulier pour le renforcement de cavités de composants de construction structurels.

8. Élément de renforcement selon la revendication 7, **caractérisé en ce que** la composition de résines époxydes peut subir une expansion thermique à une température ≤ 160 °C, en particulier de 80 °C à 150 °C, de préférence de 90 °C à 140 °C, et
**en ce que** la composition de résines époxydes durcit à une température ≥ 140 °C, en particulier de 150 °C à 220 °C, de préférence de 160 °C à 200 °C.

9. Élément de renforcement selon l'une des revendications 7 à 8, **caractérisé en ce que** la composition de résines époxydes est fixée à une pièce support, la pièce support étant de préférence constituée d'un plastique, en particulier le polyuréthane ou le polyamide, ou d'un métal, en particulier l'aluminium ou l'acier, ou d'une combinaison d'un plastique et d'un métal.

10. Utilisation d'un élément de renforcement selon l'une des revendications 7 à 9 pour le renforcement dans les cavités de composants de construction structurels.

11. Utilisation selon la revendication 10 pour le renforcement de cavités de composants de construction structurels dans les carrosseries et/ou les cadres de moyens de transport et de locomotion, en particulier de véhicules maritimes ou terrestres, ou d'aéronefs, de préférence d'automobiles, de camions, de wagons de chemin de fer, de bateaux, de navires, d'hélicoptères et d'avions.

12. Procédé de renforcement dans les cavités de composants de construction structurels, comprenant les étapes suivantes :
i) mise en place d'un élément de renforcement selon l'une des revendications 7 à 9 dans une cavité ;
ii) expansion de la composition de résines époxydes thermodurcissable monocomposant ; et
iii) durcissement de la composition de résines époxydes thermodurcissable monocomposant.

13. Procédé selon la revendication 12, **caractérisé**
**en ce que** la composition de résines époxydes thermodurcissable monocomposant peut subir une expansion thermique et en ce que l'étape ii) comprend l'élévation de la température à la température d'expansion de la composition de résines époxydes, cette température étant ≤ 160 °C, en particulier de 80 °C à 150 °C, de préférence de 90 °C à 140 °C ; et
**en ce que** l'étape iii) est une étape iii') d'élévation de la température à la température de durcissement de la composition de résines époxydes, cette température étant ≥ 140 °C, en particulier de 150 °C à 220 °C, de préférence de 160 °C à 200 °C.

14. Utilisation de particules d'aérogel telles que décrites dans l'adhésif à base de résines époxydes thermodurcissable monocomposant selon l'une des revendications 1 à 6, pour augmenter la résistance lors d'un durcissement à 175 °C pendant 25 minutes d'un adhésif à base d'une résine époxyde thermodurcissable monocomposant dans la construction automobile.
